# EUROPÄISCHE PATENTSCHRIFT

(11) **EP 0 557 518 B1**
(45) Veröffentlichungstag und Bekanntmachung des Hinweises auf die Patenterteilung: **17.04.1996**
(21) Anmeldenummer: 93905065.4
(22) Anmeldetag: 10.09.1992
(51) Int. Cl.: H05B 7/06, C21C 5/52, F27B 14/04

(54) **GLEICHSTROMOFEN MIT EINER HERDELEKTRODE, HERDELEKTRODE UND ELEKTRODENBLOCK SOWIE BETRIEBSVERFAHREN FÜR DIESEN OFEN**
D.C. FURNACE WITH A HEARTH ELECTRODE, HEARTH ELECTRODE AND ELECTRODE BLOCK, AS WELL AS PROCESS FOR OPERATING SAID FURNACE
FOUR A COURANT CONTINU POURVU D'UNE ELECTRODE DE CREUSET, ELECTRODE DE CREUSET ET BLOC ELECTRODE, ET PROCEDE D'EXPLOITATION D'UN TEL FOUR

(30) Priorität: 12.09.1991 DE 4130397
(43) Veröffentlichungstag der Anmeldung: 01.09.1993
(73) Patentinhaber: MANNESMANN Aktiengesellschaft, D-40213 Düsseldorf (DE)
(72) Erfinder: WELLS, William, Aylesbeare, Exeter EX5 2JL (GB); ELSNER, Emil, W-7573 Sinzheim-Vormberg (DE)
(74) Vertreter: Blumbach, Kramer & Partner
(86) Internationale Anmeldenummer: EP9202089
(87) Internationale Veröffentlichungsnummer: WO9305626

(56) Entgegenhaltungen:
- EP-A- 0 124 490
- EP-A- 0 157 104
- EP-A- 0 422 406
- US-A- 3 076 085
- PATENT ABSTRACTS OF JAPAN vol. 15, no. 25 (M-1071)21. Januar 1991 JP-A-2267 489
- PATENT ABSTRACTS OF JAPAN vol. 9, no. 135 (M-386)(1858) 11. Juni 1985 JP-A-60 018 271
- PATENT ABSTRACTS OF JAPAN vol. 6, no. 135 (C-115)22. Juli 1982 & JP-A-570 60 011
- DATABASE WPIL Section Ch, Week 8802, Derwent Publications Ltd., London, GB; Class M, AN 88-009121 & GB-A-2192 446
- DATABASE WPIL Section Ch, Week 8413, Derwent Publications Ltd., London, GB; Class M, AN 84-075288 & AT-D-444 582

## Beschreibung

Die Erfindung betrifft eine Herdelektrode zum Einsetzen in die Herdwand eines Ofens gemäß dem Oberbegriff des Patentanspruches 1 sowie einen Elektrodenblock mit einer solchen Herdelektrode. Sie bezieht sich ferner auf einen Gleichstromlichtbogenofen oder Gleichstrom-Widerstands-Schmelzofen gemäß dem Oberbegriff des Patentanspruches 9. Schließlich betrifft sie ein Verfahren zum Betreiben eines solchen Ofens.

Durch die DE-A1-31 06 741 ist eine Kontaktelektroden-Anordnung für Lichtbogen- oder Widerstandsschmelzöfen bekannt geworden, mit einer außerhalb der Ofenmauerung angeordnete Basisplatte mit der die äußeren Enden mehrerer stabförmiger Elektroden leitend verbunden sind, wobei der übrige Teil der Elektrode in die Ofenausmauerung hineinragt und mit der in dem Ofenherd befindlichen Schmelze Kontakt hat. Die Basisplatte ist unterhalb des Ofenbodens im Abstand angebracht. Zwischen Basisplatte und Ofenboden ist ein Zwischenraum geschaffen in den ein die Elektrodenhälse, die Ofenaußenseite und die Basisplatte kühlendes Fluid fließen kann.

Die EP-B1-0 219 650 offenbart eine ähnliche Kontaktelektroden-Anordnung die als austauschbare Baueinheit ausgebildet ist.

Durch die EP-A1-124 490 ist eine Bodenelektrode für einen Gleichstromlichtbogenofen bekannt geworden, die als elektrisch leitende, vorgefertigte Baueinheit mit dem Metallbad in Verbindung steht und über eine Schicht aus elektrisch leitendem körnigen Material auf einer Anschlußplatte ruht, die einen sich nach unten streckenden flüssigkeitsgekühlten Vorsprung aufweist. Die mit der Schmelze in Berührung stehende austauschbare elektrisch leitende Baueinheit enthält als Stromleiter mehrere Metallstäbe. Außerdem sind in ihr ein oder mehrere poröse Körper zum Einleiten eines Gases eingesetzt, das die Aufgabe hat durch eine verstärkte Badbewegung Überhitzungen zu verhindern. Außerdem wird durch das durch die porösen Steine geleitete Gas die Baueinheit gekühlt.

Durch die JP-A-22 67 489 (Patent abstracts of Japan) ist ein in die Herdwandung eines Schmelzofens eingesetzter Elektrodenblock bekannt geworden, der eingebettet in einer Füllung aus feuerfestem Material eine Vielzahl von Rohren aus elektrisch leitendem Material, wie Kupfer, enthält, die die Herdwandung durchdringen, am inneren Ende geöffnet sind und am entgegengesetzten äußeren Ende mit einer Kammer in Verbindung stehen, über die ein Kühlfluid durch die Rohre in den Ofen geleitet wird. Die Rohre weisen am äußeren Ende einen elektrischen Anschluß auf und dienen in ihrer Gesamtheit als Herdelektrode, über die die Stromzufuhr des Gleichstromlichtbogenofens erfolgt.

Da die den Strom führenden Rohre in feuerfestem Material eingebettet sind, wird ein Teil der Kühlleistung des Kühlfluids über die stromführenden Rohre an die Feuerfestmasse abgeführt, so daß nur ein Teil der auf die stromleitenden Elemente einwirkenden Kühlleistung zur Kühlung dieser Elemente ausnutzbar ist.

Aufgabe der Erfindung ist es bei einer Herdelektrode der im Oberbegriff des Patentanspruches 1 genannten Art die Kühlung zu verbessern, um hierdurch die Strombelastung der Elektrode und damit der Leistung des Ofens vergrößern zu können. Außerdem soll eine Elektrode für einen Gleichstromlichtbogenofen geschaffen werden, die eine Verbesserung der Zündbedingungen und eine Stabilisierung des Lichtbogenplasmas erlaubt. Nach Bildung einer Schmelze soll mit dem Kühlfluid zur Kühlung der Elektroden eine Badbewegung zur besseren Verteilung der Wärme im Bad sowie eine gewünschte metallurgische Behandlung durchführbar sein.

Außerdem sollen ein in die Herdwandung eines Schmelzofens einsetzbarer Elektrodenblock mit einer solchen Herdelektrode und ein eine solche Herdelektrode oder einen solchen Elektrodenblock enthaltender Ofen bereit gestellt werden. Schließlich soll ein Verfahren zum Betrieb eines Ofens der genannten Art angegeben werden, durch das in der Anfangsphase des Schmelzprozesses das Zünden des Lichtbogens verbessert und die Ausbildung eines stabilen Lichtbogenplasmas für ein schnelles Erschmelzen des festen Einsatzes gefördert wird.

Die erfindungsgemäße Herdelektrode ist durch die Merkmale des Anspruches 1 gekennzeichnet. Vorteilhafte Ausgestaltungen der Herdelektrode sind den Ansprüchen 2 und 3 zu entnehmen.

Ein erfindungsgemäßer Elektrodenblock ist in den Ansprüchen 4 bis 8, ein erfindungsgemäßer Ofen in den Ansprüchen 9 bis 13 und ein Betriebsverfahren in den Ansprüchen 14 und 15 beschrieben.

Bei der erfindungsgemäßen Herdelektrode, die einen oder mehrere Metallstäbe enthalten kann, über die der Strom abgeleitet wird, ist die unmittelbare Kühlung der Metallstäbe nicht mehr auf den in der Herdwandung außen liegenden Bereich dieser Metallstäbe begrenzt, sondern der Kühlkanal erstreckt sich längs des Metallstabs oder der Metallstäbe bis zu deren innerem Ende und mündet in den Innenraum des Ofens. Das Kühlfluid kühlt damit den Metallstab auf seiner gesamten Länge und ermöglicht so eine wesentlich verbesserte Kühlung des thermisch am meisten beanspruchten inneren Bereiches der Elektrode. Das Kühlfluid wird in axialer Richtung des Metallstabes in den Ofen geblasen und schafft dadurch bei geeigneter Anordnung der Elektrode und geeigneter Wahl des Kühlfluids verbesserte Zündbedingungen sowie eine Stabilisierung des sich ausbildenden Lichtbogenplasmas. Dieser Effekt kann noch dadurch gesteigert werden, daß entweder durch den Kühlkanal selbst oder durch benachbarte Kanäle pulverisierter Kohlenstoff eingeblasen wird.

Nach Bildung eines Metallsumpfes oberhalb der Herdelektrode wird durch das eingeblasene Kühlfluid eine Badbewegung erzielt, die bei bekannten Öfen durch gesonderte, über sogenannte Spülsteine eingeblasene Gase hervorgerufen wird. Außerdem kann bei geeigneter Auswahl des Kühlfluids auch eine gewünschte metallurgische Behandlung durchgeführt werden.

Als den Zünd- und Startvorgang begünstigendes Kühlfluid in der Anfangsphase eines Schmelzprozesses hat sich Inertgas, wie Ar, N₂ und CO₂ als vorteilhaft erwiesen, das die Ausbildung eines Lichtbogenplasmas begünstigt und das Plasma stabilisiert. Im Hinblick auf den Kühleffekt wird nach dem Bedekken der Herdelektrode mit Schmelze vorzugsweise ein Aerosol mit Wasser als Kühlfluid eingesetzt.

Es können in der unteren oder seitlichen Herdwand eine oder mehrere Herdelektroden bzw. Elektrodenblöcke vorgesehen sein, wobei sich deren Lage nicht nur nach elektrischen Gesichtspunkten, sondern auch im Hinblick auf das eingeblasene, eingespritzte oder eingepreßte Kühlfluid bestimmt. Für eine weitere Leistungssteigerung hat sich auch die Kombination mit einer Stromableitung aus dem gesamten Bodenbereich des Ofenherdes als vorteilhaft erwiesen. In diesem Fall ist der Boden aus elektrisch leitendem, feuerfestem Material gebildet und mit einem wenigstens einen elektrischen Anschluß für einen Stromleiter aufweisenden Bodenblech des Ofenherdes elektrisch leitend verbunden.

Der erfindungsgemäße Elektrodenblock enthält wenigstens eine Herdelektrode und gegebenenfalls darüberhinaus wenigstens eine Düse in einem Körper aus feuerfesten Material großer Dichte, zum Beispiel aus Magnesit oder Magnesit/Graphit, der beständig ist gegenüber chemischer Beanspruchung, mechanischer Erosion und Thermoschocks, das heißt einer thermischen Wechselbeanspruchung. Das Graphit im feuerfesten Körper trägt zur Stromleitung bei.

Als Kühlfluid eignet sich im Hinblick auf die Kühl funktion in besonderer Weise ein Sprühnebel aus einem Inertgas, zum Beispiel Argon, Stickstoff, Kohlendioxid in Verbindung mit Wasser. Anstelle oder zusätzlich zu dem Sprühnebel aus Wasser können auch Kohlenwasserstoffe, Hydroxyle und flüssiges Kohlendioxid eingesetzt werden. Das Kühlfluid wird unter Druck durch den oder die Kühlkanäle eingeblasen und schützt die Elektroden und das die Elektroden umgebende feuerfeste Material vor einer Zerstörung durch Stahl und Schlacke im Ofen. Wenn die Gase oder das eingeblasene Aerosol in das flüssige Bad des Ofenherdes gelangen, dann wird hierdurch eine Badbewegung erzeugt. Bei einem kalten Ofen wird der Lichtbogen stabilisiert, insbesondere wenn die Herdelektrode unterhalb der Spitze der oberen Elektrode angeordnet und das durch die Herdelektrode eingeblasene Gas zur Elektrodenspitze hin gerichtet ist. Solange zu Beginn des Einschmelzvorgangs die Herdelektrode noch nicht mit Schmelze bedeckt ist werden die erwähnten Inertgase aus Sicherheitsgründen ohne Wasserzusatz eingeblasen.

Die Kühlwirkung und damit der Schutz der Elektroden wird erreicht durch den Temperaturanstieg des Kühlfluids, den Phasenübergang vom flüssigen zum dampfförmigen Zustand also beispielsweise von Wasser zu Wasserdampf und schließlich durch die Dissoziation des Kühlmediums in seine Bestandteile. Da das Wasser nur als Sprühnebel eingeblasen wird und nur dann wenn der Herdboden eine so hohe Temperatur erreicht hat, daß das Wasser verdampft, also wenn die Elektroden beispielsweise bereits mit Schmelze bedeckt sind, besteht keine Explosionsgefahr.

Wie bereits erwähnt eignet sich die erfindungsgemäße Herdelektrode oder der erfindungsgemäße Elektrodenblock auch zur Durchführung metallurgischer Prozesse. Zu diesem Zweck kann entweder das Kühlfluid geeignet gewählt werden oder es kann der Metallstab der Herdelektrode innerhalb wenigstens zweier konzentrischer Rohre angeordnet werden und es können die äußeren Ringkanäle zum Einblasen von für die metallurgische Behandlung benötigten Medien benutzt werden. Bei einem Elektrodenblock können in dem Körper aus feuerfestem Material benachbart zu einer oder zu mehreren Herdelektroden auch Düsen zum Einleiten entsprechender Medien vorgesehen sein, wobei diese Düsen vorzugsweise aus wenigstens zwei mit Abstand und konzentrisch zueinander angeordneten Rohren unter Bildung eines zentralen und eines Ringkanals bestehen und in den zentralen Kanal das Medium und durch den Ringkanal ein Kühlfluid entsprechend dem Kühlfluid der Herdelektrode eingeblasen wird. Auf diese Weise ist es mit den Herdelektroden bzw. den genannten Elektrodenblöcken möglich durch Einblasen von Kohlenstoff eine Aufkohlung und durch Einblasen von Sauerstoff oder Eisenerzfines eine Entkohlung des Metallbades durchzuführen. Das Einblasen von Kohlenstoff durch derart ausgebildete Herdelektroden oder Zusatzdüsen im Elektrodenblock ist auch besonders vorteilhaft anwendbar zum Starten des Ofens nach dem Füllen mit festem Einsatzmaterial, weil durch die an der Ofeninnenseite der Herdelektrode vor dieser gebildete Kohlenstaubmenge die Leitfähigkeit zwischen Einsatzmaterial und Herdelektrode verbessert wird.

Die Erfindung wird durch Ausführungsbeispiele anhand von vier Figuren näher erläutert. Es zeigen:
- Fig. 1: im Längsschnitt einen Gleichstromlichtbogenofen mit einem in den Herdboden eingesetzten Elektrodenblock,
- Fig. 2: den einen modifizierten Elektrodenblock enthaltenden Bereich in vergrößerter Darstellung,
- Fig. 3: eine Modifikation einer Herdelektrode von Fig. 2,
- Fig. 4: im Längsschnitt eine weitere Ausbildung eines Gleichstromlichtbogenofens mit vier Elektrodenblöcken im Boden und einer Düse in der Seitenwand des Ofenherdes.

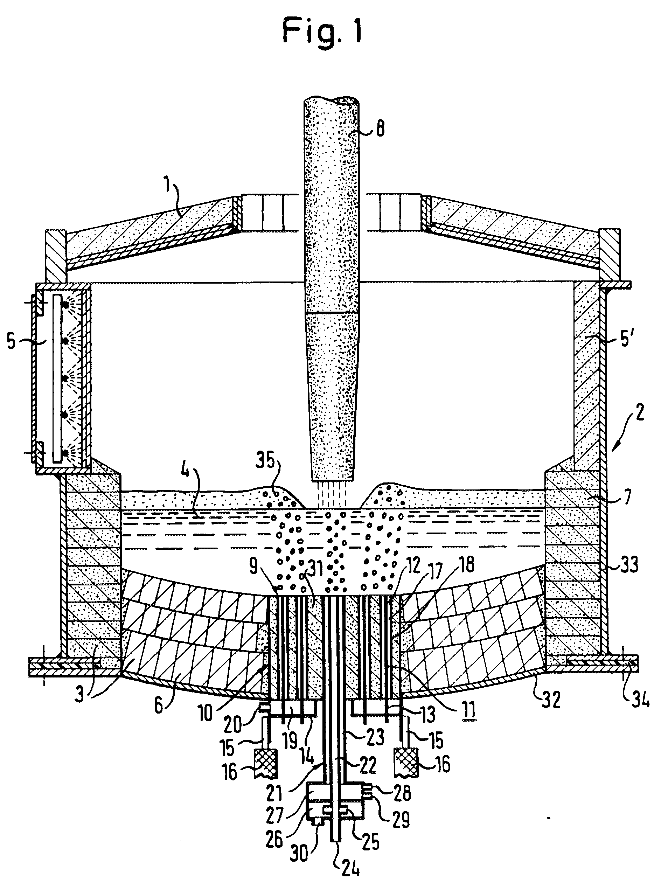

Der Gleichstromlichtbogenofen nach Fig. 1 enthält ein, mit einem wassergekühlten Deckel 1 verschließbares Ofengefäß 2, das durch einen gemauerten Ofenherd 3 zur Aufnahme einer Metallschmelze 4 und oberhalb des maximalen Schmelzspiegels angeordnete wassergekühlte oder gemauerte Wänden 5 bzw. 5' gebildet ist. Der Boden des Ofenherdes 3 ist mit 6 und dessen Seitenwand mit 7 bezeichnet. Durch eine Elektrodendurchtrittsöffnung im Deckel 1 ist eine als Kathode geschaltete obere Graphitelektrode 8 eingeführt. Die als Anode geschaltete Herdelektrode 9 ist in einem in den Herdboden 6 eingesetzten Elektrodenblock 10 ausgebildet. Der Elektrodenblock 10 ist koaxial zur oberen Elektrode 8, daß heißt symmetrisch zur verlängerten Achse dieser Elektrode im Herdboden angeordnet. Die Herdelektrode 9 ist durch mehrere Metallstäbe 11 mit zum Ofeninneren weisenden inneren Enden 12 und entgegengesetzt hierzu liegenden äußeren Enden 13 gebildet. Die äußeren Enden sind elektrisch leitend in einer Metallplatte 14 guter elektrischer Leitfähigkeit befestigt, die Anschlüsse 15 für Stromleiter 16 aufweist.

Jeder der Metallstäbe 11 der Herdelektrode 9 ist mit Abstand, unter Bildung eines Ringkanals 17, jeweils in einem im Elektrodenblock 10 befestigten Rohr 18 angeordnet, das die Herdwandung durchdringt. Zur Festlegung eines Metallstabes 11 in einem Rohr 18 sind Abstandhalter vorgesehen, die das Hindurchleiten eines Kühlfluids durch den als Kühlkanal dienenden Ringkanal 17 nicht oder nur unwesentlich behindern.

Die Metallplatte 14 ist bei dem dargestellten Beispiel ringförmig ausgebildet und begrenzt einen Raum 19 der mit den Ringkanälen 17 in Verbindung steht. Der Raum 19 ist bei dem Beispiel nach Fig. 1 durch weitere Begrenzungswände ringförmig gestaltet. Über einen Einlaß 20 ist dem Raum und damit den Ringkanälen 17 ein Kühlfluid zuführbar.

In der Mitte des Elektrodenblocks 10 ist eine Düse 21 eingesetzt, die durch zwei konzentrische Rohre gebildet wird, welche einen zentralen Kanal 22 und einen Ringkanal 23 definieren. Der zentrale Kanal 22 besitzt einen direkten. Einlaß 24 sowie einen Einlaß 25 über eine Ringkammer 26. Der Ringkanal 23 ist mit einer Ringkammer 27 verbunden. Die Ringkammer 27 besitzt Einlässe 28 und 29 für Inertgas und Wasser, und ist als Mischkammer ausgebildet, so daß dem Ringkanal 23 ein Nebel aus Inertgas und Wasser zuführbar ist.

Die Ringkammer 26 besitzt einen Einlaß 30 für die Zufuhr von Sauerstoff, so daß über die Ringkammer 26 durch den Einlaß 25 dem zentralen Kanal 22 Sauerstoff zuführbar und durch diesen in das Schmelzbad 4 einblasbar ist. Gleichzeitig oder alternativ hierzu kann über den direkten Einlaß 24 des zentralen Kanals 22 Kohlenstoff eingeblasen werden.

Der Elektrodenblock 10 kann verschiedene Formen aufweisen. Er kann beispielsweise kreisförmigen oder quadratischen Querschnitt haben. Übliche Abmessungen sind bei einem Kreisquerschnitt 200 mm Durchmesser und bei einem quadratischen Querschnitt 200 mm Kantenlänge. Die Länge des Elektrodenblockes 10 bemißt sich nach der Stärke der Herdwandung und liegt in der Größenordnung von 800 mm. Die Rohre 18 sind beispielsweise in den feuerfesten Körper 31 einzementiert. Sie sind über den Querschnitt, beispielsweise längs konzentrischer Ringe, verteilt, im Elektrodenblock 10 angeordnet. Ein üblicher Außendurchmesser der Rohre ist ein Durchmesser von 10 bis 20 mm, eine übliche Wandstärke von 2 bis 3 mm.

Die in die Rohre 18 eingesetzten Metallstäbe 17, über die der Elektrodenstrom geleitet wird, bestehen aus einem elektrisch gut leitenden Material wie Kupfer oder einer Kupferlegierung, beispielsweise einer Cu-Ni-Legierung, und haben üblicherweise einen Durchmesser von 3 bis 12 mm. Die Metallstäbe sind mittels Abstandhaltern innerhalb der Rohre 18 zentriert und mit ihren äußeren Enden 13 in der Metallplatte 14 elektrisch leitend verankert. Da die Metallstäbe im Betriebszustand des Ofens durch das durch die Ringkanäle 17 hindurchströmende Kühlfluid unmittelbar auf ihrer gesamten Länge gekühlt werden, kann bei Kupfer die Stromdichte auf mehr als 4 A/mm vergrößert werden.

Bei dem in Fig. 1 dargestellten Ofen ist mit 32 ein Bodenblech und mit 33 ein Wandblech bezeichnet. Das Wandblech 33 ist gegenüber dem Bodenblech 32 durch eine Isolierscheibe 34 elektrisch isoliert. Mit 35 ist eine Schlackenschicht bezeichnet.

Beim Anfahren des Ofens wird nach dem Chargieren des Ofengefäßes mit festem Einsatzmaterial, wie Stahlschrott, Eisenschwamm etc. durch den zentralen Kanal 22 der Düse zunächst Kohlenstoff, vorzugsweise mittels Stickstoff als Trägergas, und durch den Ringkanal 23, ebenso wie durch die Ringkanäle 17, ein die Bildung und Stabilisierung eines Lichtbogenplasmas begünstigendes Gas, wie Argon, eingeblasen. Durch den eingeblasenen Kohlenstoff wird eine elektrische Verbindung zu dem elektrisch leitenden Einsatzmaterial hergestellt, so daß die Zündbedingungen für die durch den Deckel 1 eingefahrene obere Graphitelektrode 8 verbessert werden. Außerdem wird durch den eingeblasenen Kühlgasstrom die Bildung und Stabilisierung des Lichtbogenplasmas begünstigt.

Wenn die Herdelektrode auf der Innenseite des Gefäßes 2 eine ausreichend hohe Temperatur erreicht hat, um sicherzustellen, daß ein durch die Kühlkanäle 17 bzw. 23 eingeleiteter Wassernebel sofort verdampft, ein Zustand der spätestens beim Bedecken des Elektrodenblocks mit Schmelze erreicht ist, wird den genannten Kanälen zusätzlich ein Wassernebel zugeführt, der wie bereits erwähnt, eine besonders hohe Kühlwirkung aufgrund der Verdampfungsenthalpie und der durch Dissoziation entzogenen Wärme, speziell im hochbeanspruchten, dem Ofeninneren zugewandten Bereich des Elektrodenblocks 10 bewirkt. Übliche Mengen für ein Aerosol aus Inertgas und Wasser als Kühlmedium sind drei bis vier Kubikmeter Inertgas und ein bis zwei Liter Wasser, jeweils pro Minute. Werden gasförmige Kohlenwasserstoffe als Kühlmedium eingesetzt, so sind etwa drei bis sechs Kubikmeter Naturgas bzw. zwei bis vier Kubikmeter Propan, jeweils pro Minute, erforderlich. Der Gasdurchsatz hängt selbstverständlich von der Anzahl und Größe der im jeweiligen Elektrodenblock eingesetzten Kupferstäbe ab. Für den Ringkanal 23 der Düse 21 kann das selbe Kühlfluid benutzt werden wie für die Kühlkanäle 17 zum Kühlen der Metallstäbe 11. Bei dem Beispiel nach Fig. 1 können bedarfsweise aber auch unterschiedliche Kühlmedien eingesetzt werden.

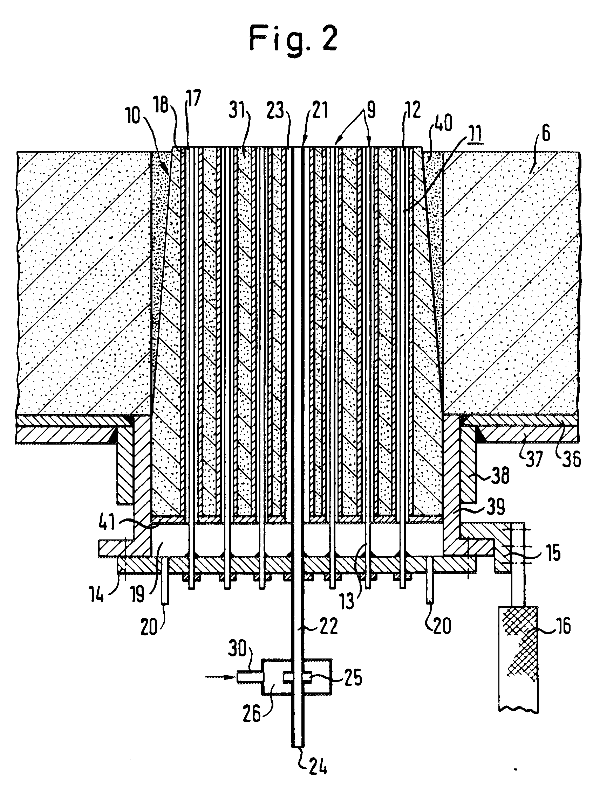

Für die vergrößerte Darstellung eines einen Elektrodenblock enthaltenden Bodenbereiches eines Ofenherdes nach Fig. 2 sind für einander entsprechende Teile die gleichen Bezugszeichen wie bei der Darstellung nach Fig. 1 verwendet. Der Elektrodenblock 10 nach Fig. 2 unterscheidet sich von dem nach Fig. 1 im wesentlichen dadurch, daß die Zahl der Metallstäbe 11 erhöht ist und der Kühlkanal 23 der Düse 21 aus dem gleichen Raum 19 mit Kühlmittel versorgt wird, über den auch die Kühlkanäle 17 gespeist werden.

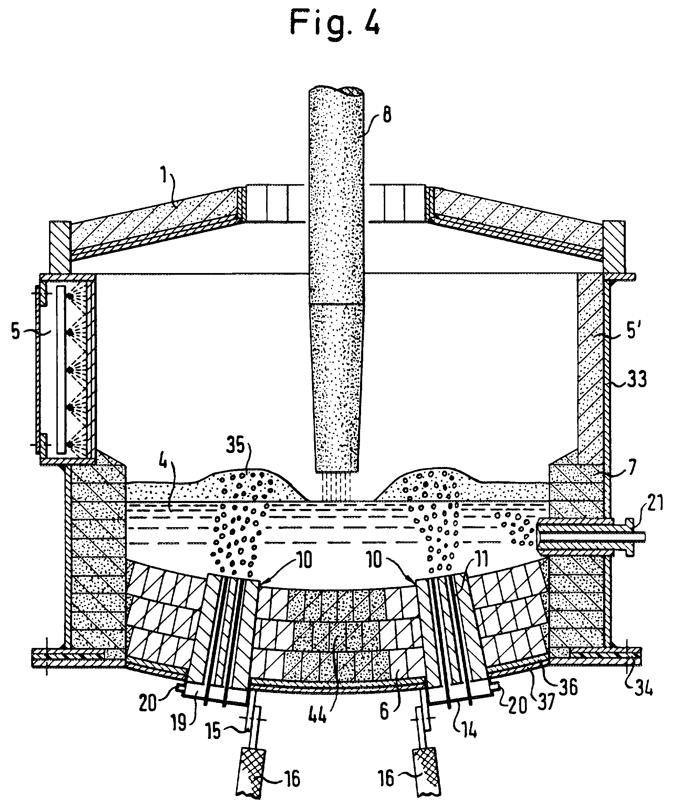

Das Bodenblech ist als eine mit einer Kupferplatte 36 bedeckte Stahlplatte 37 ausgebildet und die feuerfeste Auskleidung 6 aus elektrisch gut leitendem feuerfestem Material, wie Graphit-Magnesit-Steinen hergestellt um, wie es anhand der Fig. 4 näher erläutert werden wird, eine zusätzliche Stromableitung zu erreichen. Die Stahlplatte 37 besitzt einen Flansch 38, der einen Kupfereinsatz 39 aufnimmt, welcher mit der Kupferplatte 36 elektrisch leitend verbunden ist. Der Kupfereinsatz 39 trägt auch wenigstens einen Anschluß 15 für ein Kabel 16. Der auswechselbare Elektrodenblock 10 wird durch den Kupfereinsatz 39 und die Innenwand der Einsatzöffnung im Herdboden 6 zentriert. Der Spalt zwischen dem Elektrodenblock und dem feuerfesten Material des Herdbodens 6 ist mit feuerfestem Material 40 ausgestampft.

Der Boden des feuerfesten Körpers des Elektrodenblockes 10 ist durch eine Stahlplatte 41 abgeschlossen, in der die unteren Enden der Rohre 18 und das untere Ende des den Ringkanal 23 begrenzenden Mantelrohres der Düse 21 befestigt sind.

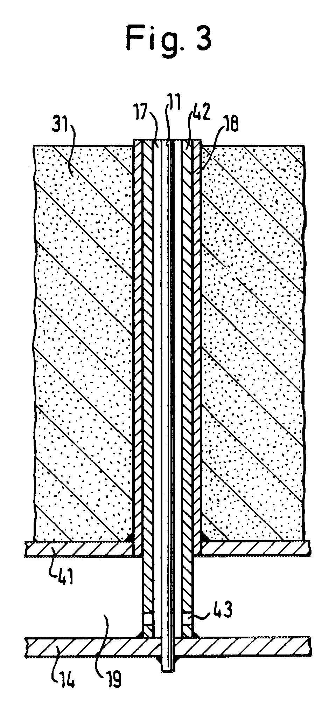

Fig. 3 stellt einen Ausschnitt dar, durch den eine weitere Modifikation der Herdelektrode veranschaulicht wird. Während bei dem Ausführungsbeispiel nach den Figuren 1 und 2 die, die Metallstäbe 11 mit Abstand umgebenden Rohre 18 nicht für die Stromleitung herangezogen werden und aus Stahl bestehen, zeigt die Ausführungsform nach Fig. 3 wie auch eine Einbeziehung dieser Rohre für die Stromleitung möglich ist. Die Rohre 18 sind zu diesem Zweck mit einem eingepressten Kupferrohr 42 versehen das am äußeren Ende bis zur elektrisch leitenden Platte 14 verlängert und mit dieser elektrisch leitend verbunden ist. Damit ist nicht nur eine Stromleitung über den Metallstab 11, sondern auch über das Kupferrohr 42 möglich, wodurch der Leitungsquerschnitt entsprechend vergrößert wird. Für die Zufuhr des Kühlmediums in den Ringkanal 17 sind im Bereich der Kammer 19 Einlässe 43 vorgesehen. Das Kühlfluid steht nicht nur in direktem Kontakt mit dem Metallstab, sondern auch mit dem Kupferrohr 42 und bewirkt eine entsprechende Kühlung desselben.

Der Lichtbogenofen nach Fig. 4 unterscheidet sich von dem nach Fig. 1 im wesentlichen dadurch, daß anstelle eines zentralen Elektrodenblockes mehrere, d.h. vier Elektrodenblöcke 10 verteilt um die verlängerte Achse der oberen Elektrode 8 im Herdboden eingesetzt sind und daß der Strom nicht nur über die Herdelektroden der Elektrodenblöcke 10, sondern auch über die Ausmauerung des Herdbodens geleitet wird. Zu diesem Zweck ist das Bodenblech, wie in Fig. 2 bereits beschrieben, als eine mit einer Kupferplatte 36 bedeckte Stahlplatte 37 ausgebildet. Die Kupferplatte ist elektrisch leitend mit den Anschlüssen 15 für die Stromkabel 16 verbunden und ferner mit der Ausmauerung des Herdbodens, die mit Ausnahme des zentralen Bereiches 44 aus elektrisch gut leitenden Steinen, wie beispielsweise Graphit-Magnesitsteinen besteht. Der zentrale Bereich 44 ist nur durch Magnesitsteine gebildet, ebenso wie die Wandausmauerung 7. Das Bodenblech 37 und das Wandblech 33 des Gefäßes 2 sind durch die Isolierscheiben 34 voneinander isoliert. Bei dem dargestellten Schmelzofen wird über die vier verteilt im Herdboden angeordneten Elektrodenblöcke 10 der wesentlichste Anteil des Gesamtstromes geführt und der Rest über die stromleitenden Bereiche der mit dem elektrisch leitenden Bodenblech verbunden Bodenausmauerung 6.

Das durch die Elektrodenblöcke eingeblasene Kühlmedium bewirkt eine gute Durchmischung des Bads und ein Aufschäumen der Schlacke um die Spitze der oberen Elektrode 8 herum, so daß die Wände vor der unmittelbaren Strahlungshitze durch den Lichtbogen geschützt sind. Bei dem in Fig. 4 dargestellten Beispiel ist in der Seitenwand eine Unterbaddüse 21 zum Einblasen von Kohlenstoff oder Sauerstoff vorgesehen.

## Patentansprüche

1. Herdelektrode zum Einsetzen in die Herdwandung eines Schmelzofens mit wenigstens einem Rohr (18), das im eingesetzten Zustand der Herdelektrode die Herdwandung durchdringt und am inneren Ende geöffnet ist und das am entgegengesetzten äußeren Ende einen Kühlmitteleinlaß (20) für ein Kühlfluid zum Kühlen der Herdelektrode aufweist,
ferner mit einem elektrischen Anschluß (15) am äußeren Ende der Herdelektrode,
dadurch **gekennzeichnet**, daß innerhalb des Rohres (18) mit Abstand ein Metallstab (11) unter Bildung eines Ringkanals (17) hindurchgeführt und das äußere Ende des Metallstabes (11) mit dem elektrischen Anschluß (15) elektrisch verbunden ist.

2. Herdelektrode nach Anspruch 1, dadurch **gekennzeichnet**, daß sie wenigstens zwei konzentrische Rohre (18) enthält, von denen das äußerste in der Herdwandung und im innersten der Metallstab (11) befestigt ist.

3. Herdelektrode nach Anspruch 1 oder 2, dadurch **gekennzeichnet**, daß das den Metallstab (11) umgebende Rohr (18) ein auf der Innenseite mit einer Kupferschicht (42) versehenes Stahlrohr ist.

4. Elektrodenblock zum Einsetzen in die Herdwandung eines Schmelzofens, dadurch **gekennzeichnet**, daß er wenigstens eine in einem Körper (31) aus feuerfestem Material befestigte Herdelektrode (9) nach einem der Ansprüche 1 bis 3 enthält.

5. Elektrodenblock nach Anspruch 4, dadurch **gekennzeichnet**, daß das feuerfeste Material im wesentlichen aus Magnesit oder Magnesit/Graphit besteht.

6. Elektrodenblock nach Anspruch 4 oder 5, dadurch **gekennzeichnet**, daß in dem Körper (31) aus feuerfestem Material wenigstens zwei Rohre (18) befestigt sind und die durch die Rohre hindurchgeführten Metallstäbe (11) der Herdelektroden (9) jeweils am äußeren Ende (13) vorstehen und in einer Metallplatte (14) befestigt sind, die den elektrischen Anschluß (15) aufweist und einen mit den Ringkanälen (17) verbundenen Raum begrenzt, der den Kühlmitteleinlaß (20) aufweist.

7. Elektrodenblock nach einem der Ansprüche 4 bis 6, dadurch **gekennzeichnet**, daß er eine Düse (21) aus wenigstens einem Rohr aufweist.

8. Elektrodenblock nach Anspruch 7, dadurch **gekennzeichnet**, daß die Düse (21) wenigstens zwei konzentrisch mit Abstand zueinander angeordnete Rohre enthält und neben einem zentralen Kanal (22) wenigstens einen Ringkanal (23) aufweist und daß die Kanäle mit getrennten Kammern (26, 27 bzw. 19) in Verbindung stehen, die Einlässe (25, 28, 29, 20) für die in die Kanäle einzuspeisenden Medien aufweisen.

9. Gleichstromlichtbogenofen- oder Widerstands-Schmelzofen mit einem Herd (3) zur Aufnahme einer Metallschmelze (4) und einer oberen Elektrode (8) gekennzeichnet durch wenigstens eine, in der Herdwandung angeordnete Herdelektrode (9), nach einem der Ansprüche 1 bis 3.

10. Gleichstromlichtbogenofen- oder Widerstands-Schmelzofen mit einem Herd (3) zur Aufnahme einer Metallschmelze (4) und einer oberen Elektrode (8), gekennzeichnet durch wenigstens einen in der Herdwandung angeordneten Elektrodenblock (10) nach einem der Ansprüche 4 bis 8.

11. Schmelzofen nach Anspruch 9 oder 10, dadurch **gekennzeichnet** , daß die Herdelektrode (9) bzw. der Elektrodenblock (10) koaxial zur oberen Elektrode (8) angeordnet ist.

12. Schmelzofen nach Anspruch 9 oder 10, dadurch **gekennzeichnet**, daß mehrere Herdelektroden (9) bzw. Elektrodenblöcke (10) verteilt um die verlängerte Achse der oberen Elektrode (8) angeordnet sind.

13. Schmelzofen nach einem der Ansprüche 9 bis 12, dadurch **gekennzeichnet**, daß der Boden (6) des Ofenherdes (3) aus elektrisch leitendem, feuerfestem Material gebildet und mit einem wenigstens einen elektrischen Anschluß für einen Stromleiter aufweisenden Bodenblech (36) des Ofenherdes (3) elektrisch leitend verbunden ist.

14. Verfahren zum Betrieb eines Gleichstromlichtbogenofens nach einem der Ansprüche 9 bis 13, dadurch **gekennzeichnet**, daß zu Beginn einer Einschmelzphase von festem Einsatzmaterial durch den Kühlkanal der Herdelektrode ein die Bildung und Stabilisierung eines Lichtbogenplasmas begünstigendes Gas und nach dem Bedecken der Herdelektrode mit Schmelze ein Aerosol aus Wasser und Gas eingeblasen wird.

15. Verfahren nach Anspruch 13, dadurch **gekennzeichnet**, daß zu Beginn der Einschmelzphase durch den Kühlkanal der Herdelektrode oder einen hierzu benachbarten Kanal Kohlenstaub eingeblasen wird.

## Claims

1. A hearth electrode for insertion into the hearth wall of a smelting furnace having at least one tube (18) which in the inserted condition of the hearth electrode passes through the hearth wall and is opened at the inner end and which at the opposite outer end has a cooling agent inlet (20) for a cooling fluid for cooling the hearth electrode,
further having an electrical connection (15) at the outer end of the hearth electrode,
characterised in that a metal bar (11) is passed through within the tube (11) at a spacing, forming an annular duct (17), and the outer end of the metal bar (11) is electrically connected to the electrical connection (15).

2. A hearth electrode according to claim 1 characterised in that it includes at least two concentric tubes (18) of which the outermost one is fixed in the hearth wall and the metal bar (11) is fixed in the innermost one.

3. A hearth electrode according to claim 1 or claim 2 characterised in that the tube (18) surrounding the metal bar (11) is a steel tube provided on the inside with a copper layer (42).

4. An electrode block for insertion into the hearth wall of a smelting furnace characterised in that it includes at least one hearth electrode (9) according to one of claims 1 to 3, which is fixed in a body (31) of refractory material.

5. An electrode block according to claim 4 characterised in that the refractory material substantially comprises magnesite or magnesite/grapite.

6. An electrode block according to claim 4 or claim 5 characterised in that at least two tubes (18) are fixed in the body (31) of refractory material and the metal bars (11) of the hearth electrodes (9), which are passed through the tubes, each project at the outer end (13) and are fixed in a metal plate (14) which has the electrical connection (15) and defines a space which is connected to the annular ducts (17) and which has the coolant inlet (20).

7. An electrode block according to one of claims 4 to 6 characterised in that it has a nozzle (21) comprising at least one tube.

8. An electrode block according to claim 7 characterised in that the nozzle (21) includes at least two tubes which are arranged concentrically and at a spacing from each other and which besides a central duct (22) has at least one annular duct (23) and that the ducts are communicated with separate chambers (26, 27 and 19 respectively) which have inlets (25, 28, 29, 20) for the agents to be fed into the ducts.

9. A direct current arc furnace or resistance smelting furnace comprising a hearth (3) for accomodating a molten bath (4) and an upper electrode (8) characterised by at least one hearth electrode (9) according to one of claims 1 to 3, which is arranged in the hearth wall.

10. A direct current arc furnace or resistance smelting furnace comprising a hearth (3) for accommodating a molten bath (4) and an upper electrode (8) characterised by at least one electrode block (10) according to one of claims 4 to 8, which is arranged in the hearth wall.

11. A smelting furnace according to claim 9 or claim 10 characterised in that the hearth electrode (9) or the electrode block (10) respectively is arranged coaxially with respect to the upper electrode (8).

12. A smelting furnace according to claim 9 or claim 10 characterised in that a plurality of hearth electrodes (9) or electrode blocks (10) respectively are arranged in a distributed array around the extended axis of the upper electrode (8).

13. A smelting furnace according to one of claims 9 to 12 characterised in that the bottom (6) of the furnace hearth (3) is formed from electrically conducting refractory material and is electrically conductingly connected to a bottom plate (36) of the furnace hearth (3), which bottom plate has at least one electrical connection for a current conductor.

14. A method of operating a direct current arc furnace according to one of claims 9 to 13 characterised in that at the beginning of a smelting phase for solid batch material a gas for promoting the formation and stabilisation of an arc plasma is injected through the cooling duct of the hearth electrode and after the hearth electrode is covered with molten bath an aerosol of water and gas is injected.

15. A method according to claim 13 characterised in that coal dust is injected at the beginning of the smelting phase through the cooling duct of the hearth electrode or a duct adjacent thereto.

## Revendications

1. Electrode de creuset pour l'utilisation dans la paroi du creuset d'un four de fusion comportant au moins un tube (18) qui traverse la paroi du creuset, dans l'état monté de l'électrode de creuset, et est ouvert à l'extrémité interne,
et qui comporte à l'extrémité externe opposée, une entrée de fluide de refroidissement (20) pour un fluide de refroidissement pour refroidir l'électrode de creuset, de plus un raccordement électrique (15) à l'extrémité externe de l'électrode de creuset,
caractérisée en ce qu'à l'intérieur du tube (18) est guidée, avec un écartement, une tige métallique (11) formant un canal annulaire (17), et l'extrémité externe de la tige métallique (11) est reliée électriquement au raccordement électrique (15).

2. Electrode de creuset selon la revendication 1,
caractérisée en ce qu'elle comporte au moins deux tubes concentriques (18), desquels le tube externe est fixé dans la paroi du creuset et la tige métallique (11) est fixée dans le tube interne.

3. Electrode de creuset selon l'une des revendications 1 ou 2,
caractérisée en ce que le tube (18) entourant la tige métallique (11) est un tube en acier muni, sur la face interne, d'une couche de cuivre (42).

4. Bloc d'électrodes pour l'utilisation dans la paroi du creuset d'un four de fusion,
caractérisé en ce qu'il comporte au moins une électrode de creuset (9) selon l'une des revendications 1 à 3, fixée dans un corps (31) en matériau réfractaire.

5. Bloc d'électrodes selon la revendication 4,
caractérisé en ce que le matériau réfractaire est constitué pour l'essentiel de magnésite ou de magnésite et de graphite.

6. Bloc d'électrodes selon l'une des revendications 4 ou 5,
caractérisé en ce que, dans le corps (31) en matériau réfractaire, sont fixés au moins deux tubes (18), et les tiges métalliques (11) des électrodes de creuset (9), guidées à travers les tubes, font à chaque fois saillie à l'extrémité externe (13), et sont fixées dans une plaque métallique (14) qui comporte le raccordement électrique (15) et un espace relié aux canaux annulaires (17) et comportant l'entrée de fluide de refroidissement (20).

7. Bloc d'électrodes selon l'une des revendications 4 à 6,
caractérisé en ce qu'il comporte une buse (21) en au moins un tube.

8. Bloc d'électrodes selon la revendication 7,
caractérisé en ce que la buse (21) comporte au moins deux tubes agencés de façon concentrique et avec un écartement l'un par rapport à l'autre, et, à côté d'un canal central (22), au moins un canal annulaire (23), et en ce que les canaux sont reliés ensemble par des chambres séparées (26,27 ou 19) qui comportent des entrées (25,28,29,20) pour les fluides à alimenter dans les canaux.

9. Four à arc à courant continu ou four de fusion à résistance comportant un creuset (3) pour recevoir une coulée métallique (4) et une électrode supérieure (8),
caractérisé par au moins une électrode de creuset (9) selon l'une des revendications 1 à 3, agencée dans la paroi du creuset.

10. Four à arc à courant continu ou four de fusion à résistance comportant un creuset (3) pour recevoir une coulée métallique (4) et une électrode supérieure (8),
caractérisé par au moins un bloc d'électrodes (10) selon l'une des revendications 4 à 8, agencé dans la paroi du creuset.

11. Four de fusion selon l'une des revendications 9 ou 10,
caractérisé en ce que l'électrode de creuset (9) ou le bloc d'électrodes (10) est agencé coaxialement à l'électrode supérieure (8).

12. Four de fusion selon l'une des revendications 9 ou 10,
caractérisé en ce que plusieurs électrodes de creuset (9) ou blocs d'électrodes (10) sont agencés en étant répartis autour de l'axe prolongé de l'électrode supérieure (8).

13. Four de fusion selon l'une des revendications 9 à 12,
caractérisé en ce que le fond (6) du creuset (3) du four est formé d'un matériau réfractaire, électriquement conducteur, et est relié de façon électriquement conductrice à une tôle de fond (36) du creuset (3) du four, comportant au moins un raccordement électrique pour un conducteur de courant.

14. Procédé pour le fonctionnement d'un four à arc à courant continu selon l'une des revendications 9 à 13,
caractérisé en ce qu'au début d'une phase de fusion de matériau d'utilisation solide, on souffle, à travers le canal de refroidissement de l'électrode de creuset, un gaz favorisant la formation et la stabilisation d'un plasma à arc électrique, et après le recouvrement de l'électrode de creuset par de la fonte, un aérosol d'eau et de gaz.

15. Procédé selon la revendication 14,
caractérisé en ce qu'au début de la phase de fusion, de la poussière de charbon est soufflée à travers le canal de refroidissement de l'électrode de creuset ou à travers un canal adjacent.
